# EUROPEAN PATENT SPECIFICATION

(11) **EP 1 612 544 B1**
(45) Date of publication and mention of the grant of the patent: **27.02.2013**
(21) Application number: 05253807.1
(22) Date of filing: 20.06.2005
(51) Int. Cl.: G01N 21/90, G01N 21/88, G06T 7/00

(54) **Machine for inspecting glass bottles**
Vorrichtung zur Inspektion von Glasflaschen
Appareil pour l'inspection de bouteilles en verre.

(30) Priority: 02.07.2004 US 883885
(43) Date of publication of application: 04.01.2006
(73) Proprietor: Emhart Glass S.A., 6330 Cham (CH)
(72) Inventor: Dordoni, Joe J., Watkins Glen, NY 14891 (US); Rentschler, Michael G., Burdett, New York 14818 (US); Tennakoon, Sarath G., Elmira, New York 14901 (US); Diehr, Richard D., Horseheads, New York 14845 (US); Loo, Kee Sin, Singapore 570215 (SG)
(74) Representative: Warren, Anthony Robert

(56) References cited:
- EP-A- 0 655 610
- DE-A1- 4 129 656
- US-A- 4 691 231
- US-A- 5 510 610

## Description

The present invention relates to machines which inspect glass bottles for defects which could have occurred in the forming process. A light source directs light through the sidewalls of the bottle, and imperfections will interfere with the light rays. For example, should a wall have a blister, the blister may change the direction of the light rays passing therethrough and as a result these rays may not reach the viewing medium such as a CCD camera, causing the blister to look black. Such blackness would indicate a defect.

Critical to the inspection process is the comparison of adjacent pixels in the camera by a computer which compares the light intensity of these pixels. When adjacent pixels progress from light to dark, the computer recognizes that there is an edge and its evaluation may define the edge as the edge of a defect.

Some bottle surfaces are formed with stippling, (lots of small bumps) on the surface (stippling can be generalized to various kinds of embossing). Stippling appears as grey spots in the image, which, when edge detected, is detected as a significant enough change to mask defects even though the defects may be darker or have sharper edges. The grey spots are the result of a loss of light getting to the camera because the stippling has acted like a lens to spread that light out, and so only a part of the light passing through there gets to the camera. Around the stippling the light is not being dispersed and so appears brighter to the camera.

US-A-5,510,610 discloses apparatus for detecting defects on the bottom of a bottle which is formed with a knurled annular area. An electronic image of the bottom is taken and the knurled annular area is selected and unwrapped to lay out the knurling in one or more lines. The electronic image may be enhanced by a digital processing technique such as remapping the intensity representation by means of a look up table. The apparatus then eliminates the knurling through mathematical processes which involve making a copy of the image, shifting the copy by a whole number of knurling pitches, and then subtracting the shifted copy from the original image. Because the copy was offset by a function of the pitch of the knurling, the knurling is subtracted out, leaving just the images of any defects. This detection process relies on the characteristic that knurling, unlike stippling, has a constant pitch.

DE 41 29 656 discloses a device for conditioning video signals to exploit the dynamic range of the display. The present invention is directed to a machine for inspecting glass bottle for defects, generally as disclosed in US-A-5,510,610, and as defined in the preamble of claim 1.

It is accordingly an object of the present invention to provide a way of locating defects associated with the wall of a bottle which has been stippled.

According to the present invention, there is provided a machine for inspecting glass stippled bottles as defined in claim 1.

The present invention will now be described with reference to the accompanying drawings which illustrate a presently preferred embodiment incorporating the principles of the invention, and in which:
Figure 1 is a schematic illustration of a machine for inspecting bottles; and
Figure 2 is a Look Up Table for use in the inspection machine computer disclosed in Figure 1.

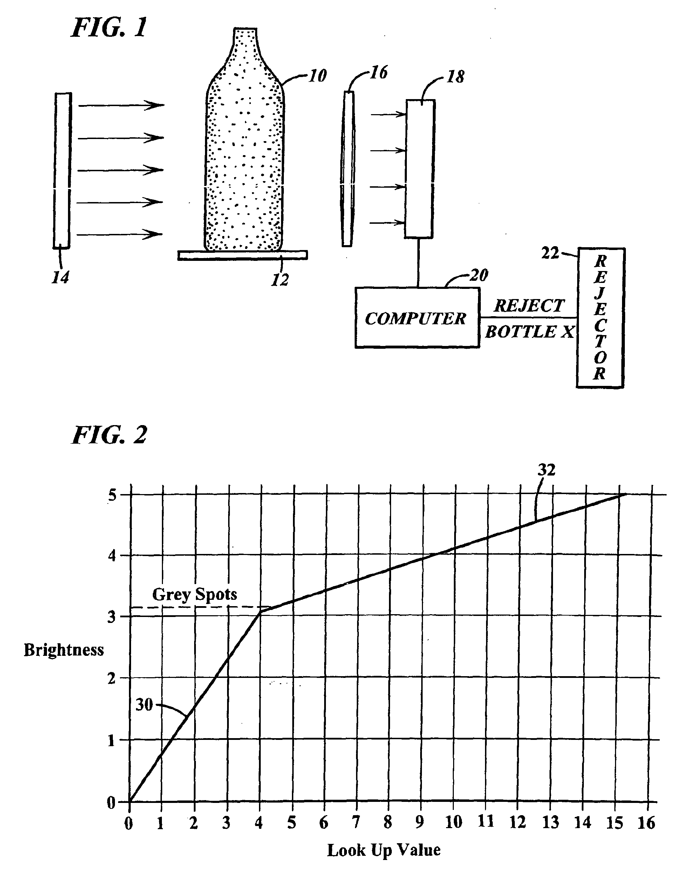

An inspection machine is schematically disclosed in Figure 1. A glass bottle 10 is conveyed through the inspection machine via a conveyor 12. During this transit the bottle is located at an inspection station which includes a light source 14, which directs light towards the stippled bottle, and the light which passes through the bottle is focused by a suitable lens 16 onto the imaging area, e.g. pixel matrix or array, of a CCD camera or the like 18. The computer 20 scans the pixels, comparing the brightness of adjacent pixels, and when the change or difference reaches a defined limit, the computer determines that there is a defect and issues a Reject Bottle X signal to a rejector 22. The light source may be plane or curved.

The look up table, represented graphically in Figure 2, is a plot of the pixel brightness or light intensity signal (Y-axis), black or relatively dark being 0 and white, relatively bright or light being 5, versus look up value (X-axis). The plot has a high gain portion 30 from black to an intensity just below the brightness or light intensity of a grey portion of the stippling, and a low gain portion 32 which continues the plot from this point.

By high gain is meant the portion 30 where the increase in brightness (3 units) divided by the increments of look up value (4 units) is higher (3÷4 = 0.75) than the portion (32) where the increase in brightness (5-3 = 2 units) divided by the increments of look up value (15-4 = 11 units), i.e. the gain is (2÷11 = 0.18). As shown, equal changes in light intensity or brightness in the high and low gain portions of the plot (1 unit for example in the X-axis), produce drastically different changes in the Y-axis. By applying a look up table that compresses the number of grey shades between the grey spots of the stippling and the white around them, the edge detection (rate or degree of change in the grey shade from one pixel to the next) algorithm will produce a larger step change for the defect than for the grey stippling spots. In other words, a change from grey towards black will have about eight times the weight as a change from grey towards white, and the grey spots will therefore not mask black defects.

The algorithm, in effect, tells the computer which slope portion the brightness signal is on. For example, when the signal is transitioning from white to grey the computer knows from the sequential brightness/look up values that it is on slope portion 32, i.e., it is transitioning from bright to grey. When, however, there is a defect, it will transition from grey to black and the sequential brightness/look up values will tell the computer that it is on slope portion 30 which is picking up black defects. As a result, since slope portion 30 starts at a brightness below the brightness of grey spots, whenever the signal is on slope portion 30, the camera is seeing a defect.

Although a single camera is shown in Fig. 1, multiple cameras could be provided around the bottle axis to inspect the whole bottle surface. Alternatively, the bottle could be rotated relative to a single camera or multiple cameras.

## Claims

1. A machine for inspecting glass bottles for defects comprising
an inspection station including
means (12) for supporting a bottle (10) for inspection,
a light source (14) for illuminating a bottle when supported at the inspection station,
imaging means (18) for imaging the illuminated bottle on a pixel matrix, the pixels of the image varying in intensity from white or bright to black or dark, and
computer means (20) for evaluating the pixels of the image including a look up table for values to be assigned to specific light intensities from white or bright to black or dark,
**characterized in that**:
the machine is operable to inspect stippled bottles for defects,
the pixels of the image on the pixel matrix of the imaging means (18) vary in intensity from white or bright to grey at the locations of stippling,
the plot of said look up table has a high gain portion (30) from black to grey and a low gain portion (32) from grey to white, and
the computer means (20) compresses by applying the look up table the number of grey shades between the grey spots of the stippling and the white around them, thereby to produce a larger step change for a defect than for grey stippling spots and determines the presence of a defect when a difference the brightness of adjacent pixels reaches a defined limit.

2. A machine as claimed in claim 1, wherein the low gain portion (32) forms a continuation of the high gain portion (30) at a light intensity value below that of grey.

3. A machine as claimed in claim 1 or 2, wherein the low gain portion (32) and/or high gain portion (30) is/are linear and continuous.

## Patentansprüche

1. Maschine zum Prüfen von Glasflaschen auf Defekte, umfassend
eine Prüfstation mit
einer Einrichtung (12) zum Halten einer Flasche (10) zur Prüfung,
einer Lichtquelle (14) zum Beleuchten einer Flasche, wenn sie an der Prüfstation gehalten wird,
einer Abbildungseinrichtung (18) zum Abbilden der beleuchteten Flasche auf eine Pixelmatrix, wobei die Pixel des Bildes in ihrer Intensität von weiß oder hell nach schwarz oder dunkel variieren, und
einer Computereinrichtung (20) zum Auswerten der Pixel des Bildes mit einer Nachschlagetabelle für Werte, die bestimmten Lichtintensitäten von weiß oder hell bis schwarz oder dunkel zugeordnet werden sollen,
**dadurch gekennzeichnet, dass**
die Maschine getüpfelte Flaschen auf Defekte prüfen kann,
die Pixel des Bildes auf der Pixelmatrix der Abbildungseinrichtung (18) an den getüpfelten Orten in ihrer Intensität von weiß oder hell nach grau variieren,
der Ausdruck der Nachschlagetabelle einen Abschnitt (30) hoher Verstärkung von schwarz zu grau und einen Abschnitt (32) niedriger Verstärkung von grau nach weiß aufweist, und
die Computereinrichtung (20) durch Anwendung der Nachschlagetabelle die Anzahl von grauen Schatten zwischen den grauen Punkten der Tüpfelung und den darum befindlichen weißen komprimiert, wodurch ein größerer Sprung für einen Defekt produziert wird als für graue Tüpfelpunkte, und das Vorhandensein eines Defektes bestimmt, wenn ein Helligkeitsunterschied benachbarter Pixel einen definierten Grenzwert erreicht.

2. Maschine nach Anspruch 1, wobei der Abschnitt (32) niedriger Verstärkung eine Fortsetzung des Abschnittes (30) hoher Verstärkung bei einem Lichtintensitätswert unterhalb demjenigen von grau bildet.

3. Maschine nach Anspruch 1 oder 2, wobei der Abschnitt (32) niedriger Verstärkung und/oder der Abschnitt (30) hoher Verstärkung linear und kontinuierlich ist/ sind.

## Revendications

1. Machine pour inspecter des bouteilles de verre quant à des défauts comprenant :
un poste d'inspection comprenant :
des moyens (12) pour supporter une bouteille (10) pour inspection,
une source de lumière (14) pour éclairer une bouteille lorsqu'elle est supportée au poste d'inspection,
des moyens de formation d'image (18) pour former une image de la bouteille éclairée sur une matrice de pixels, l'intensité des pixels de l'image variant de blanc ou clair à noir ou foncé, et
des moyens informatiques (20) pour évaluer les pixels de l'image comprenant une table de correspondance pour des valeurs à attribuer à des intensités de lumière spécifiques de blanc ou clair à noir ou foncé,
**caractérisée en ce que** :
la machine peut être utilisée pour inspecter des bouteilles mouchetées quand à des défauts,
l'intensité des pixels de l'image sur la matrice de pixels des moyens de formation d'image (18) varie de blanc ou clair à gris aux emplacements de mouchetage,
le tracé de ladite table de correspondance comporte une partie de gain élevé (30) de noir à gris et une partie de faible gain (32) de gris à blanc, et
les moyens informatiques (20) compressent, en appliquant la table de correspondance, le nombre de nuances de gris entre les points gris du mouchetage et le blanc autour d'eux, pour produire de ce fait un changement de pas pour un défaut plus grand que pour des points de mouchetage gris et déterminent la présence d'un défaut lorsqu'une différence de luminosité de pixels adjacents atteint une limite définie.

2. Machine selon la revendication 1, dans laquelle la partie de faible gain (32) forme une continuité de la partie de gain élevé (30) à une valeur d'intensité de lumière au-dessous de celle du gris.

3. Machine selon la revendication 1 ou 2, dans laquelle la partie de faible gain (32) et/ou la partie de gain élevé (30) est/sont linéaires et continues.
